# FASCICULE DE BREVET EUROPEEN

(11) **EP 2 342 114 B1**
(45) Date de publication et mention de la délivrance du brevet: **26.12.2012**
(21) Numéro de dépôt: 08875619.2
(22) Date de dépôt: 27.10.2008
(51) Int. Cl.: B61L 27/00, B61L 15/00

(54) **METHODE DE ROUTAGE DE DONNEES ENTRE AU MOINS UN VEHICULE GUIDE ET UN RESEAU AU SOL**
VERFAHREN ZUM ROUTING VON DATEN ZWISCHEN MINDESTENS EINEM SPURGEBUNDENEN FAHRZEUG UND EINEM STRECKENSEITIGEM NETZWERK
METHOD FOR ROUTING DATA BETWEEN AT LEAST ONE GUIDED VEHICLE AND A GROUND NETWORK

(43) Date de publication de la demande: 13.07.2011
(73) Titulaire: Siemens SAS, 93200 Saint-Denis (FR)
(72) Inventeur: DE LAJUDIE-DEZELLUS, Raphaëlle, F-92120 Montrouge (FR); CHAZEL, Anne-Sophie, F-92350 Le Plessis-Robinson (FR)
(74) Mandataire: Fischer, Michael
(86) Numéro de dépôt international: PCT/FR2008/001509
(87) Numéro de publication internationale: WO 2010/049595

(56) Documents cités:
- EP-A1- 1 727 311
- EP-A2- 1 237 389
- WO-A1-2007/060084
- WO-A1-2007/063168
- WO-A1-2007/107424
- US-A1- 2005 208 924

## Description

L'invention concerne une méthode de routage de données entre au moins un véhicule guidé et un réseau au sol selon le préambule de la revendication 1.

A titre de véhicule guidé, l'invention entend en particulier les moyens de transport en commun (dit aussi public), tels que des trains, métro, tramway, trolleybus, bus, etc. et plus particulièrement celui des véhicules ferroviaire ou à guidage/roulement portant pneumatique et à traction par guidage central dont la trajectoire est matérialisée par un unique rail central métallique entre deux voies de roulement des roues à pneumatique. Le guidage du véhicule peut être automatique (sans besoin d'un chauffeur à bord du véhicule, mais à l'aide d'un système de commande embarqué lui-même en relation avec un réseau de communication au sol pour son contrôle) ou manuel. L'application de l'invention pourrait également être possible pour tout autre moyen de transport terrestre, naval ou aérien.

Entre un réseau de communication au sol et un train guidé, des liaisons de type radio sont réalisées entre des bornes émettrices/réceptrices de communication au sol et des émetteurs/récepteurs embarqués. Les émetteurs/récepteurs embarqués sont eux-mêmes liés à un réseau de communication embarqué comprenant au moins un routeur de gestion de trafic de données dans, vers et hors du véhicule. Dans le cas d'un véhicule de forme allongée tel qu'un bus ou d'un ensemble de véhicules couplés tels qu'un train, au moins deux routeurs sont en général disposés de part et d'autre du dit véhicule ou train et associés avec des émetteurs/récepteurs de type radio à des fins de pouvoir communiquer avec l'une ou l'autre des bornes de communication disposées au sol le long de la voie.
Suivant ce schéma, un chemin de routage associé à un canal radio est donc généralement utilisé. Ce canal peut ainsi présenter des limites de capacités disponibles, par exemple en terme de débit, et donc retarder voire empêcher la bonne mise en oeuvre d'applications telles que nécessitant une transmission de données videos (haut débit requis), phoniques ou critiques. Dans un contexte de forte mobilité, des conditions physiques de transmission de données peuvent aussi évoluer très rapidement, en particulier la présence d'autre véhicule dits « masqueurs » peut détériorer voire empêcher un signal de communication entre un véhicule et une borne de communication au sol.

Une solution à ce type de problème double de type débit/masquage est de rapprocher les bornes de communications au sol. Ceci a inévitablement un impact sur la complexité de mise en oeuvre d'une telle installation et bien entendu sur ses coûts.

Le document WO 2007/107424 A1 divulgue un système d'échange de données entre des véhicules ferroviaires et des bornes de communications le long de la voie.

Un but de la présente invention est donc de proposer une méthode de routage (via transmission radio) de données à large gamme de débits entre au moins un véhicule et un réseau au sol, sans avoir à modifier l'infrastructure existante des éléments embarqués de communication comme des bornes de communication disposées au sol et faisant interface entre le véhicule et le réseau sol. Cette méthode de routage doit également bénéficier pleinement des capacités disponibles de communication de l'infrastructure mise en oeuvre, par exemple en termes de qualité, débit, sécurité, etc.

Un autre but de la présente invention est, suivant les divers débits exigés de données transmises tel qu'évoqués ci-dessus, d'assurer un routage dynamiquement fiabilisé (donc assurer la disponibilité du lien) au regard du problème de masquage par d'autres véhicules ou obstacles entre un véhicule et au moins une borne de communication.

L'invention présente ainsi une méthode de routage de données entre au moins un véhicule guidé et un réseau-sol, le dit véhicule se déplaçant sur une voie entre au moins une première et une deuxième bornes de communication disposées au sol le long de la voie selon la revendication 1.
Un ensemble de sous-revendications présente également des avantages de l'invention.

Ainsi, à partir d'une méthode de routage de données entre au moins un véhicule guidé et le sol (sous-entendu un moyen de communication au sol tel qu'un réseau-sol), ledit véhicule se déplaçant sur une voie entre au moins une première et une deuxième bornes de communication disposées au sol le long de la voie, les dites bornes étant aptes à échanger des flux de données entre un réseau-sol et au moins un module de routage embarqué dans le véhicule, ladite méthode présente les étapes suivantes :
- une mesure de qualité de transmission d'un premier signal entre la première borne et le module de routage est effectuée périodiquement,
- une mesure de qualité de transmission d'un deuxième signal entre la deuxième borne et le module de routage est effectuée périodiquement,
- une mesure de débit disponible de données du premier signal entre le réseau-sol et le module de routage est effectuée périodiquement,
- une mesure de débit disponible de données du deuxième signal entre le réseau-sol et le module de routage est effectuée périodiquement,
- au moins un chemin de routage d'au moins une partie des données entre le sol et le module de routage est également périodiquement déterminé par l'intermédiaire d'au moins une des bornes de communication si celle-ci présente une qualité mesurée de signal supérieure à un seuil prédéterminé et un débit de donnée supérieur à un seuil prédéterminé.

En d'autres termes, suivant les mesures de qualités et de débits, un routage initial de données est périodiquement re-réparti sélectivement vers au moins une des deux bornes tout en canalisant également sélectivement des données vers un chemin ou un autre en fonction des débits de ces dites données. Il est à noter que cette méthode ne nécessite avantageusement aucune infrastructure matérielle supplémentaire à celle qui existe. Tout au plus, il est fait usage d'algorithme usuel de re-routage, tel que basé sur des techniques connues de réseau maillé (selon des standard du type MESH sous protocole OLSR). Ces algorithmes peuvent être mis en application de façon autonome dans une unité de calcul embarquée, elle-même en communication avec le ou les moyens de routage embarqués dans le véhicule ou le train.
Ainsi, tout artefact gênant de masquage pourra être dynamiquement contourné au besoin par une pluralité de chemins de routage, si le cas se présente pour un véhicule concerné.

En particulier, la présente méthode prévoit aussi fort avantageusement que le routage dynamique précédent s'étend à la création de chemins faisant usage de véhicules pouvant être masqueurs comme nouvelles bornes-relais intermédiaires entre le véhicule concerné par la méthode selon l'invention et une des bornes de communication visée.

Pratiquement, si la voie est fréquentée par au moins un véhicule dit masqueur en ce qu'il se trouve entre le véhicule ainsi masqué d'une des bornes de communication et ladite borne, le chemin de routage est dévié par un deuxième module de routage embarqué dans le véhicule masqueur, le dit deuxième moyen de routage étant sélectionné sous conditions que :
- une mesure de qualité de transmission d'un troisième signal entre le dit deuxième moyen de routage et la borne de communication présente une qualité mesurée de signal supérieure à un seuil prédéterminé, et
- une mesure de débit disponible de données du troisième signal entre le réseau-sol et le deuxième module de routage présente un débit de données supérieur à un seuil prédéterminé.

Ces étapes supplémentaires de la méthode selon l'invention peuvent être avantageusement appliquées à plusieurs véhicules masqueurs et dès que des conditions de routage suffisantes seront réunies, la transmission pourra être validement effectuée sous une pluralité de chemins. Suivant les différentes gammes de débits disponibles via un ou un autre chemin validé, les données de différents débits (par exemple video, phoniques, critiques) sont sélectivement et individuellement re-routées (ou transmises) sur ces chemins pour atteindre finalement sans obstacle et délai d'attente la ou les bornes de communication au sol (ou vice-versa si la méthode selon l'invention est appliquée à des éléments de routage au sol sur lesquels les algorithmes précités sont implantés pour rechercher les chemins de routage d'une borne vers un véhiculte).

Ainsi, le chemin de routage peut être, selon une dynamique très flexible, subdivisé en plusieurs chemins simultanés et distincts de données dont chacune de leurs bande-passantes est dépendante de valeurs mesurées de leur qualité de transmission et de leur débit minimal assuré.

Afin d'optimiser la sélection entre type de données (débit) et chemins possibles, les données transmises sont déjà pré-réparties en divers types de données ayant différents domaines de débit, telles que des données critiques de véhicule ou de trafic, des données de vidéos ou des données phoniques. Cette précaution peut être prise au niveau du moyen de routage. Ainsi, selon le type des données, chaque module de routage répartit dynamiquement une transmission de données en différents chemins de routage, en choisissant lesdits chemins en fonction de leurs capacités disponibles de transmission et du débit exigé de chacun des types de données à transmettre. Pour chacun des chemins de routage utilisés, un chemin de routage peut (indépendamment des autres chemins) transiter par au moins un relais-radio embarqué sur des véhicules se déplaçant entre les deux bornes de communication.

Dans le cadre de la présente invention, des algorithmes de routages sur des chemins possibles suivant une mesure de qualité de service peuvent ainsi être associés à des algorithmes de distribution de flux de données répondant à des types d'applications nécessitant des débits critiques de données. Selon un type de flux souhaité, un ou un autre chemin possible peut donc être adéquatement privilégié.
Actuellement, un trafic de donnée passe par un côté d'un train et le débit proposé à un utilisateur (= dispositif embarqué de communication ou moyen de communication mobile d'un passager) correspond à un débit disponible en limite de portée. Grâce à la méthode selon l'invention, le débit proposé à l'utilisateur peut être largement augmenté, puisque des ressources « sur mesures» peuvent être utilisées à un instant précis, soit en offrant une liaison adaptée à un haut débit requis, soit en offrant une liaison adaptée à un moindre débit, où dans ce dernier cas, deux routes peuvent être utilisées simultanément avec un partage de charge équilibré du réseau de communication.

La méthode selon l'invention permet en particulier très avantageusement de prévoir un chemin de routage étant subdivisé en plusieurs chemins disjoints, sur lesquels des données à caractère redondant sont transmises. Cet aspect de type sécuritaire et à des fins de très bonne disponibilité est fondamental pour le bon contrôle des véhicules, en particulier dans le cas de véhicules guidés (sans chauffeur).

Il est aussi possible de prévoir qu'une des bornes de communication a priori au sol soit en fait disposée dans un véhicule supplémentaire, lui-même « disposé » au sol. En effet, les véhicules guidés actuels disposent de toute façon de bornes de communications à leur bord. En ce sens, Il est donc fort appréciable de proposer une utilisation de la méthode de routage selon l'invention pour router des données entre un premier véhicule et un deuxième véhicule, et mettre en oeuvre les données dans des applications liées aux véhicules. La méthode de routage selon l'invention, présente donc, en plus de son aspect de communication entre un véhicule et un réseau-sol, un usage possible de routage de données transmises entre plusieurs véhicules. Les applications sont nombreuses en ce sens, par exemple pour fiabiliser une transmission de données informatives sécuritaires de distances entre des véhicules auto-guidés afin d'éviter toute collision entre eux.

Des exemples de réalisation et d'application sont fournis à l'aide de figures décrites :
- Figures 1A, 1B, 1C: Méthode de routage selon l'invention par plusieurs chemins pour un véhicule,
- Figure 2: Méthode de routage selon l'invention pour des applications en haut débit pour un véhicule et des véhicules masqueurs,
- Figure 3: Méthode de routage selon l'invention sous critèresd'occupation de bande pour un véhicule et des véhicules masqueurs,
- Figures 4A, 4B, 4C: Méthode de routage selon l'invention avec une gestion de routage de divers débits de données pour un véhicule,
- Figures 5A, 5B, 5C: Méthode de routage selon l'invention avec une gestion de routage de divers débits de données pour un véhicule et des véhicules relais.

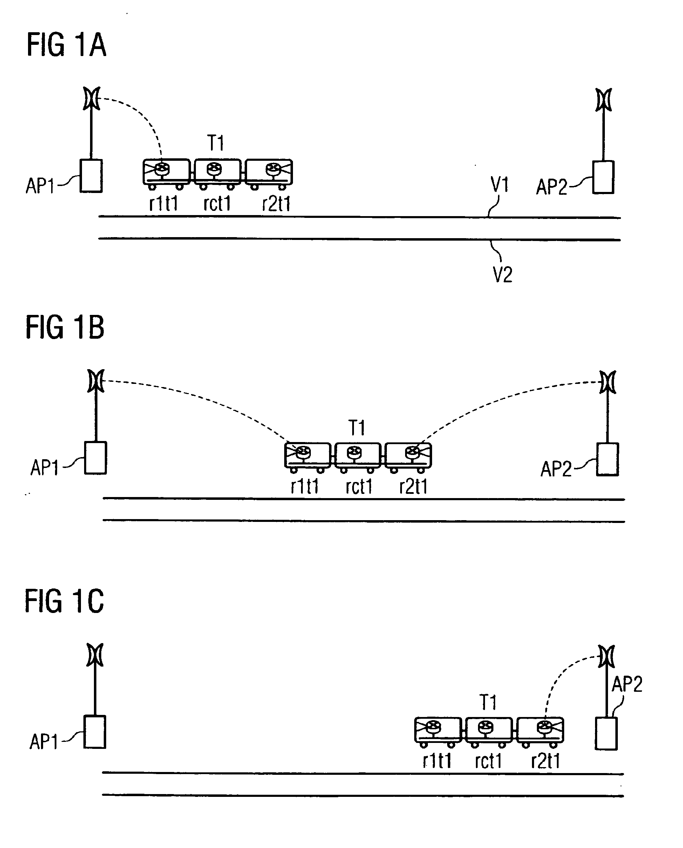

**Figures 1A, 1B, 1C** présentent la méthode de routage selon l'invention pour un routage de données par trois chemins possibles entre un véhicule guidé, ici un train (T1), se déplaçant sur une de deux voies (V1, V2) entre au moins une première et une deuxième bornes de communication (AP1, AP2) disposées au sol le long de la voie, les dites bornes étant aptes à échanger des flux de données entre un réseau-sol (non représenté) et au moins un module de routage (r1t1, rct1, r2t1) embarqué dans le véhicule. Dans cet exemple, il existe plusieurs types de modules de routage possible, tels que les modules de type routeur et radio-émetteur/récepteur (r1t1, r2t1) connectés au réseau de communication embarqué, lui-même comprenant un routeur central embarqué (rct1). Idéalement, les modules radio (r1t1, r2t1) sont disposés aux extrémités amont/aval du véhicule (comme un train) et présentent donc des qualités de transmission radio différentes en fonction de leur distance avec des éléments de communication (non-embarqués et externes audit véhicule).

Dans le cas des figures 1A et 1C, lorsque le train (T1) est proche d'une des bornes de communication radio (r1t1 ou r2t1), la qualité du signal reçu est très bonne (par exemple après estimation du signal de mesure de qualité au-dessus d'un seuil de qualité prédéfini dans le routeur contrôleur rct1), le débit physique sur le canal est donc élevé.
Dans le cas de la figure 1B, lorsque le train est approximativement entre les bornes de communication radio, la couverture radio est faite de telle façon que le train peut par un de ses deux moyens de routage à chaque extrémité avant/arrière du train être en communication avec les deux bornes avec un signal de qualité à niveau moyen. Le débit physique de chaque canal radio est alors beaucoup moins élevé que dans les cas des figures 1A et 1C.
La méthode selon invention propose alors d'utiliser les deux chemins radio simultanément pour accroître le débit et l'offrir aux applications en toute transparence.

A titre d'exemple, on peut dresser un bilan suivant ce constat, pour lequel :
- en figure 1A, la qualité mesurée du lien radio activé AP1-r1t1 est très bonne ; le débit disponible est de 54M.
- en figure 1B, en mode alors commuté sur un routage à chemins multiples simultanés de routage, les qualités mesurées des liens radio activés AP1-r1t1, AP2-r2t1 sont de niveau moyen ; le débit disponible de chaque lien est de 36M, soit de 72M en mode simultané selon l'invention.
- en figure 1C, la qualité mesurée du lien radio activé AP2-r2t1 est très bonne ; le débit disponible est de 54M.

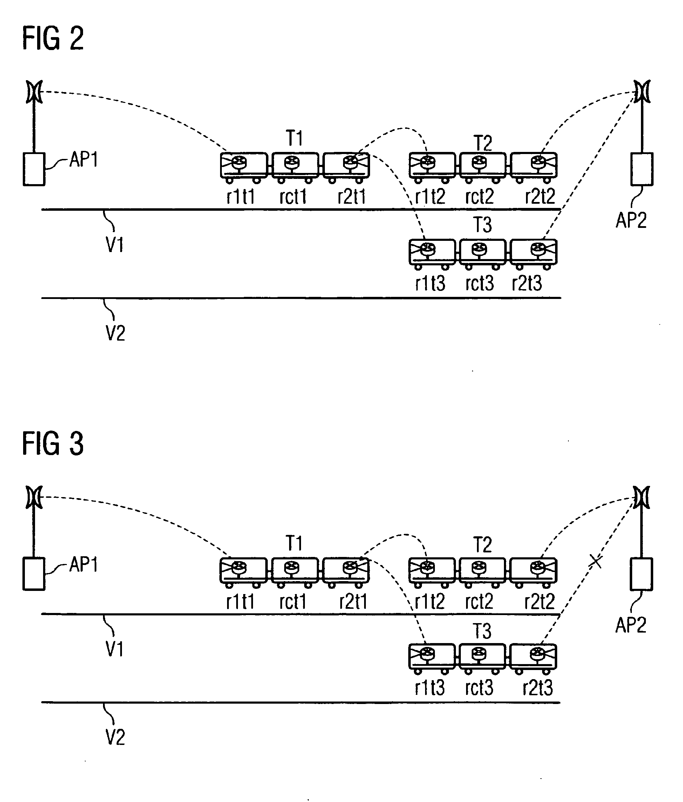

La **figure 2** est issue de la figure 1B adaptée à la méthode de routage selon l'invention pour des applications en haut débit pour le train dit ici premier train (T1) sur sa voie (V1). Deux autres véhicules ou deuxième et troisième trains masqueurs (T2, T3), respectivement circulant sur une des voies (V1, V2) se déplacent alors entre le train (T1) et la deuxième borne de communication (AP2).
La présence de deux trains masqueurs atténue fortement le niveau de signal reçu par le premier train (T1) depuis la deuxième borne radio (AP2). Le chemin direct r2t1-AP2 du .moyen de routage (r2t1) du premier train (T1) n'offre donc plus un débit suffisant. En utilisant des algorithmes de maillage comme basé sur un standard OLSR, au moins un des moyens de routage (r1t2, r2t2, r1t3, r2t3) des deux trains masqueurs peut être utilisé comme relais entre le moyen de routage (r2t1) du premier train (T1) et la deuxième borne radio (AP2). Les moyens de routage sont ici supposés par couple disposés en amont et en aval de chaque train suivant une direction de voie.
La méthode selon l'invention permet alors d'utiliser des liens disponibles en passant par les trains masqueurs (T2 et T3) offrant ainsi des débits bien supérieurs au débit initial pour communiquer avec le réseau sol.
Dans ce cas, le routage depuis le train (T1) vers le réseau sol via les bornes radio (AP1, AP2) se compose de plusieurs chemins simultanés possibles : ainsi à titre d'exemple, un flux haut débit de données du train vers le sol pourra être réparti sur le chemin r1t1-AP1 d'un côté amont au premier train (T1) et sur les chemins r2t1-r1t2-r2t2-AP2 et/ou r2t1-r1t3-r2t3-AP2 de l'autre côté aval au déplacement du train. L'invention propose d'utiliser simultanément ces différents chemins, permettant ainsi d'augmenter le débit à offrir aux applications.

A titre d'exemple, on peut dresser un bilan suivant ce constat, pour lequel pour le premier train (T1), la qualité mesurée du lien radio activé AP1-r1t1 est moyenne ; le débit disponible est de 36M. La qualité mesurée du second lien radio r2t1-AP2 est réellement faible et peut aussi avoir un faible débit de 6M. Pour des données à haut débit, ces dernières valeurs sont en dessous des seuils de mesure aptes à établir un chemin direct avec la deuxième borne radio (AP2). C'est pourquoi les trains masqueurs pourront faire office de relais de transmission avec le premier train (T1). Les trains (T2, T3) ainsi devenus relais présentent de plus des liaisons internes et externes (r1t2-r2t2-AP2, r1t3-r2t3-AP2) de très haute qualité et à haut débit (54M) possible en raison de leur proximité à la deuxième borne radio (AP2).

La **figure 3** représente la figure 2 en tant que méthode de routage selon l'invention, cependant dans le cas où des critères d'occupation de bande pour le premier véhicule (T1) et les véhicules masqueurs (T2, T3) doivent être pris en compte.

Dans ce cas, le troisième train (T3) sur la seconde voie (V2) utilise déjà toute la bande possible du lien (r2t3-AP2) pour émettre un flux haut débit entre son second moyen de routage aval (r2t3) et la deuxième borne radio (AP2).
La méthode selon l'invention permet alors au premier train (T1) de connaître l'occupation de ce lien provenant du moyen de routage (r2t3) et de router une partie de son flux de données par un lien alternatif (r1t1-AP1) avec le premier moyen de routage (r1t1) du premier train (T1) et la première borne radio (AP1) ainsi que de router une autre partie du flux de données en utilisant les moyens de routage du deuxième train (T2) et non plus ceux du troisième train (T3) (ou tout au plus en utilisant un des moyens de routage (r1t3) encore libre de tout critère d'occupation mesuré et trop limitatif vis-à-vis d'un seuil défini selon l'invention).

Analoguement aux parties descriptives des figures précédentes, il est possible de donner un exemple quantitatif pour illustrer les conditions d'un tel critère d'occupation selon figure 3 :
- Qualité du lien radio AP1-r1t1 moyenne (seuil acceptable de qualité), débit disponible:36M (seuil acceptable de débit)
- Qualité du lien radio AP2-r2t1 faible (sous seuil qualité), faible débit disponible: 6M (sous seuil débit, car masquage des trains et même sans masquage, qualité et débits moyens donc mise en oeuvre de la méthode selon l'invention nécessaire au moyen des trains-relais T2, T3)
- Qualité du lien radio AP2-r2t3 très bonne, très bon débit disponible:54M mais bande partiellement déjà occupée par un trafic entre le troisième train (T3) et le réseau-sol (donc critère d'occupation existant !),
- Qualité du lien radio AP2-r2t2 très bonne, très bon débit disponible:54M
- Qualité du lien radio r2t1-r1t2 très bonne, très bon débit disponible 54M
- Qualité du lien radio r2t1-r1t3 très bonne, très bon débit disponible 54M

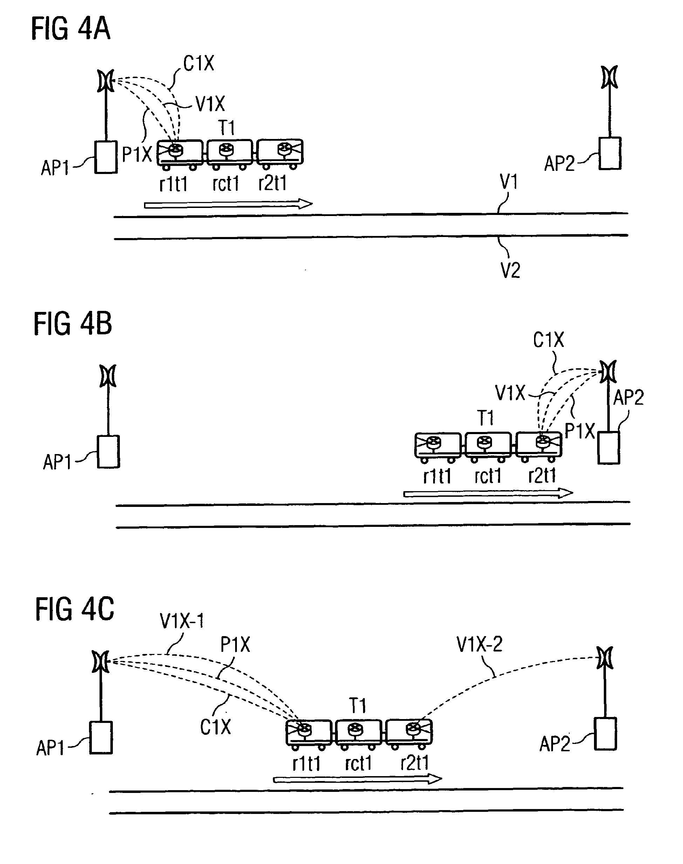

Les Figures 4A, 4B, 4C décrivent la méthode de routage selon l'invention avec une gestion de routage de divers débits de données pour un véhicule, ici le premier train (T1) tel que respectivement aux figures 1A, 4C, 4B.

La méthode selon l'invention inclut aussi une gestion des flux de données selon leur criticité et leur besoin en débit. Il est par exemple imaginable qu'entre le train et le réseau-sol les données à échanger soient de plusieurs types :
- Données critiques présentant : taux de pertes minimal, meilleure qualité de signal, pas de répartition de la charge, possibilité d'envoi de données à caractère redondant via des chemins multiples disjoints, par exemple à des fins de disponibilité (voire en cas de besoin sécuritaire de données).
- Données de voix présentant: latence minimale donc nombre de sauts minimum, pas de répartition de la charge.
- Données vidéo présentant: débit maximum, meilleure qualité de signal, répartition de la charge.
L'ensemble de ces contraintes lié aux exigences de débits est pris en compte dans l'invention pour router des paquets de données selon le type de leur application défini entre autre par la criticité et un besoin intrinsèque de débit.

Par exemple, si le train (T1) (ou un autre train Ti, == 2, 3, 4...) souhaite émettre vers le réseau-sol
• Des données voix de phonie P1X (resp.PiX)
• Des données critiques C1X (resp. CiX)
• Des données de vidéo V1X. (resp.ViX)
Suivant sa position sur la voie et la topologie instantanée du réseau-sol et ses bornes radio (voire aussi en présence d'autres trains à proximité), les chemins de routage résultant de la mise en oeuvre de la méthode selon l'invention et empruntés par les paquets seront distincts en fonction du type de leur application. En particulier, cet aspect est illustré à la figure 4C, où pour le type de données vidéos V1X à haut débit, les deux chemins V1X-1, V1X-2 depuis le train (T1) vers chacune des bornes radio (AP1, AP2) seront simultanément activés alors que pour les deux autres types de données P1X, C1X à débit moins élevé, il sera possible de ne réserver qu'un des chemins (ici avec la première borne radio AP1).

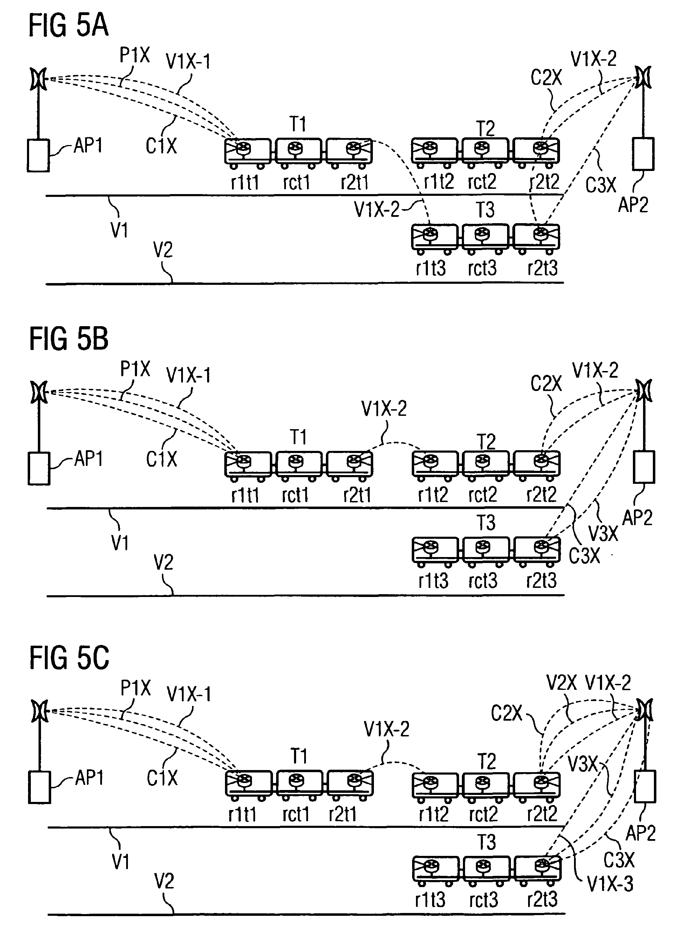

Les **figures 5A, 5B, 5C** illustrent la méthode de routage selon l'invention avec une gestion de routage de divers débits de données pour un véhicule et des véhicules relais. En résumé, ces dernières figures rassemblent les cas précédents, en particuliers issus des figures 2 ou 3 (trains masqueurs) ainsi que de la figure 4C (données à divers débits).

Les figures 5A, 5B, 5C décrivent ainsi le comportement d'algorithmes de choix de route visés par l'invention lors de la présence de trains masqueurs T2, T3 et selon le trafic entre chaque train et le réseau-sol.
Figure 5A : cas de la présence de deux trains masqueurs (T2, T3) ne transmettant pas de données vidéo ViX à haut débit.
Selon l'invention, un pont de données video V1X-2 est donc facilement activable entre le premier train (T1) et la deuxième borne radio (AP2) en déviant par exemple le chemin de routage par le troisième train (T3) pour assurer une meilleure qualité et un haut débit train-sol.

Figure 5B : Cas de la présence de deux trains masqueurs dont un (troisième train T3) transmet un flux vidéo (V3X), sachant que chaque train émet toujours ses données critiques (CiX).
Le pont initial de routage V1X-2 via le troisième train (T3) de la figure 5A est alors substitué en un pont de routage distinct passant par le deuxième train (T2) n'émettant pas de données video et donc ayant une disponibilité de débit encore suffisante (et meilleure que le troisième train T3) pour faire transiter les données video (V1X) du premier train (T1).

Figure 5C : Cas de la présence de deux trains masqueurs qui transmettent chacun un flux vidéo (V2X, V3X), sachant que chaque train émet toujours ses données critiques (CiX). Sachant que les débits des canaux de type video des trains masqueur-relais sont moyens, la méthode selon l'invention va répartir le transit des données video (V1X) du premier train (T1) sur deux chemins parallèles depuis les trains relais et la deuxième borne radio (AP2).

## Revendications

1. Méthode de routage de données entre au moins un véhicule guidé (T1) et le sol, ledit véhicule se déplaçant sur une voie entre au moins une première et une deuxième bornes de communication (AP1, AP2) disposées au sol le long de la voie, les dites bornes étant aptes à échanger des flux de données entre un réseau-sol et au moins un module de routage (r1t1, r2t1) embarqué dans le véhicule,
- une mesure de qualité de transmission d'un premier signal entre la première borne (AP1) et le module de routage est effectuée périodiquement,
- une mesure de qualité de transmission d'un deuxième signal entre la deuxième borne (AP2) et le module de routage est effectuée périodiquement,
- une mesure de débit disponible de données du premier signal entre le réseau-sol et le module de routage est effectuée périodiquement,
- une mesure de débit disponible de données du deuxième signal entre le réseau-sol et le module de routage est effectuée périodiquement,
- un chemin de routage d'au moins une partie des données entre le sol et le module de routage est également périodiquement déterminé par l'intermédiaire d'au moins une des bornes de communication si celle-ci présente une qualité mesurée de signal supérieure à un seuil prédéterminé et un débit de données supérieur à un seuil prédéterminé,
**caractérisée en ce que** le chemin de routage est dynamiquement subdivisé en plusieurs chemins simultanés et distincts de données dont chacune de leurs bande-passantes est dépendante de valeurs mesurées de leur qualité de transmission et de leur débit minimal assuré.

2. Méthode selon revendication 1, pour laquelle si la voie est fréquentée par au moins un véhicule dit masqueur (T3) en ce qu'il se trouve entre le véhicule (T1) ainsi masqué d'une des bornes de communication (AP1, AP2) et ladite borne, le chemin de routage est dévié par un deuxième module de routage (r1t3, r2t3) embarqué dans le véhicule masqueur, le dit deuxième moyen de routage étant sélectionné sous conditions que :
- une mesure de qualité de transmission d'un troisième signal entre le dit deuxième moyen de routage et la borne de communication présente une qualité mesurée de signal supérieure à un seuil prédéterminé, et
- une mesure de débit disponible de données du troisième signal entre le réseau-sol et le deuxième module de routage présente un débit de données supérieur à un seuil prédéterminé.

3. Méthode selon une des revendications précédentes, pour laquelle les données transmises sont réparties en divers types de données ayant différents domaines de débit, telles que des données critiques de véhicule ou de trafic, des données de vidéos ou des données phoniques.

4. Méthode selon revendication 3, pour laquelle selon le type des données, chaque module de routage répartit une transmission de données en différents chemins de routage, en choisissant lesdits chemins en fonction de leurs capacités disponibles de transmission et du débit exigé de chacun des types de données à transmettre.

5. Méthode selon une des revendications précédentes, pour laquelle le chemin de routage transite par au moins un relais-radio embarqué sur des véhicules entre les deux bornes de communication.

6. Méthode selon une des revendications précédentes, pour laquelle le chemin de routage est subdivisé en plusieurs chemins disjoints, sur lesquels des données à caractère redondant sont transmises.

7. Méthode selon une des revendications précédentes, pour laquelle une des bornes de communication est disposée dans un véhicule supplémentaire.

8. Utilisation de la méthode de routage selon une des revendications précédentes pour router des données entre un premier véhicule et un deuxième véhicule, et mettre en oeuvre les données dans des applications liées aux véhicules.

## Claims

1. Method for routing data between at least one guided vehicle (T1) and the ground, said vehicle moving on a track between at least a first and a second communication terminal (AP1, AP2) disposed on the ground along the track, and said terminals being capable of exchanging data streams between a ground network and at least one routing module (r1t1, r2t1) on board the vehicle,
- a measurement of the transmission quality of a first signal between the first terminal (AP1) and the routing module is carried out periodically,
- a measurement of the transmission quality of a second signal between the second terminal (AP2) and the routing module is carried out periodically,
- a measurement of the available data throughput rate of the first signal between the ground network and the routing module is carried out periodically,
- a measurement of an available data throughput rate of the second signal between the ground network and the routing module is carried out periodically,
- a routing path for at least a portion of the data between the ground and the routing module is also determined periodically by at least one of the communication terminals if it has a measured signal quality higher than a predetermined threshold and a data throughput rate higher than a predetermined threshold,
**characterised in that** the routing path is dynamically subdivided into several simultaneous and distinct data paths, each having a bandwidth dependent on values measured by their transmission quality and their minimum guaranteed throughput rate.

2. Method according to claim 1, wherein, if the track is frequented by at least one masking vehicle (T3) and the masking vehicle is present between the vehicle (T1) thus masked from one of the communication terminals (AP1, AP2) and said terminal, the routing path is diverted via a second routing module (rlt3, r2t3) on board the masking vehicle, with said second routing means being selected under conditions such that:
- a measurement of the transmission quality of a third signal between said second routing means and the communication terminal produces a measured signal quality higher than a predetermined threshold, and
- a measurement of the available data throughput rate of the third signal between the ground network and the second routing module produces a data throughput rate higher than a predetermined threshold.

3. Method according to one of the preceding clams, wherein the data transmitted are divided into different data types having different throughput rate ranges, such as critical vehicle or traffic data, video data, and audio data.

4. Method according to claim 3, wherein, depending on the data type, each routing module divides a data transmission into different routing paths, choosing said paths according to their available transmission capacity and the throughput rate demanded by each of the data types to be transmitted.

5. Method according to one of the preceding claims, wherein the routing path is channelled via at least one radio relay which is on board vehicles between the two communication terminals.

6. Method according to one of the preceding claims, wherein the routing path is subdivided into several separate paths and redundant data are transmitted thereon.

7. Method according to one of the preceding claims, wherein one of the communication terminals is disposed in an additional vehicle.

8. Use of the routing method according to one of the preceding claims for routing data between a first vehicle and a second vehicle, and for implementing data in applications linked to vehicles.

## Patentansprüche

1. Verfahren zum Routing von Daten zwischen mindestens einem spurgebundenen Fahrzeug (T1) und dem Boden, wobei sich das besagte Fahrzeug auf einer Fahrspur zwischen mindestens einem ersten und einem zweiten Kommunikationsanschluss (AP1, AP2) bewegt, die am Boden entlang der Spur angeordnet sind, wobei die besagten Anschlüsse dazu geeignet sind, Datenflüsse zwischen einem Bodennetz und mindestens einem an Bord des Fahrzeugs befindlichen Routing-Modul (r1t1, r2t1) auszutauschen,
- wobei periodisch eine Messung der Übertragungsqualität eines ersten Signals zwischen dem ersten Anschluss (AP1) und dem Routing-Modul durchgeführt wird,
- wobei periodisch eine Messung der Übertragungsqualität eines zweiten Signals zwischen dem zweiten Anschluss (AP2) und dem Routing-Modul durchgeführt wird,
- wobei periodisch eine Messung der verfügbaren Datenrate des ersten Signals zwischen dem Bodennetz und dem Routing-Modul durchgeführt wird,
- wobei periodisch eine Messung der verfügbaren Datenrate des zweiten Signals zwischen dem Bodennetz und dem Routing-Modul durchgeführt wird,
- wobei ein Routing-Weg mindestens eines Teils der Daten zwischen dem Boden und dem Routing-Modul ebenfalls periodisch über mindestens einen der Kommunikationsanschlüsse bestimmt wird, falls dieser eine gemessene Signalqualität, die höher als ein vorbestimmter Schwellenwert ist, und eine Datenrate, die höher als ein vorbestimmter Schwellenwert ist, aufweist,
**dadurch gekennzeichnet, dass** der Routing-Weg dynamisch in mehrere simultane und verschiedene Datenwege aufgeteilt wird, deren Durchlassbereiche jeweils von gemessenen Werten ihrer Übertragungsqualität und ihrer sichergesellten minimalen Datenrate abhängig sind.

2. Verfahren nach Anspruch 1, wobei, falls die Fahrspur von mindestens einem Fahrzeug befahren wird, das als "verdeckendes Fahrzeug" (T3) bezeichnet wird, insofern als es sich zwischen dem somit bezüglich eines der Kommunikationsanschlüsse (AP1, AP2) verdeckten Fahrzeug (T1) und dem besagten Anschluss befindet, der Routing-Weg durch ein an Bord des verdeckenden Fahrzeugs befindliches zweites Routing-Modul (r1t3, r2t3) umgeleitet wird, wobei das besagte zweite Routing-Mittel unter den Bedingungen ausgewählt wird, dass:
- eine Messung der Übertragungsqualität eines dritten Signals zwischen dem besagten zweiten Routing-Mittel und dem Kommunikationsanschluss eine gemessene Signalqualität aufweist, die höher als ein vorbestimmter Schwellenwert ist, und
- eine Messung der verfügbaren Datenrate des dritten Signals zwischen dem Bodennetz und dem zweiten Routing-Modul eine Datenrate aufweist, die höher als ein vorbestimmter Schwellenwert ist.

3. Verfahren nach einem der vorhergehenden Ansprüche, wobei die übertragenen Daten in verschiedene Datentypen eingeteilt werden, die unterschiedliche Datenratenbereiche aufweisen, wie etwa kritische Fahrzeug- oder Verkehrsdaten, Videodaten oder Schalldaten.

4. Verfahren nach Anspruch 3, wobei je nach dem Typ der Daten jedes Routing-Modul eine Datenübertragung auf verschiedene Routing-Wege verteilt, wobei es die besagten Wege in Abhängigkeit von ihren verfügbaren Übertragungskapazitäten und von der geforderten Datenrate jedes der zu übertragenden Datentypen wählt.

5. Verfahren nach einem der vorhergehenden Ansprüche, wobei der Routing-Weg über mindestens ein Funkrelais verläuft, das sich an Bord von Fahrzeugen zwischen den beiden Kommunikationsanschlüssen befindet.

6. Verfahren nach einem der vorhergehenden Ansprüche, wobei der Routing-Weg in mehrere getrennte Wege aufgeteilt wird, über welche Daten mit redundantem Charakter übertragen werden.

7. Verfahren nach einem der vorhergehenden Ansprüche, wobei einer der Kommunikationsanschlüsse in einem zusätzlichen Fahrzeug angeordnet ist.

8. Anwendung des Routing-Verfahrens nach einem der vorhergehenden Ansprüche, um Daten zwischen einem ersten Fahrzeug und einem zweiten Fahrzeug zu routen und die Daten in Anwendungen einzusetzen, die an die Fahrzeuge gebunden sind.
